# EUROPEAN PATENT APPLICATION

(11) **EP 2 430 958 A2**
(43) Date of publication of application: **21.03.2012**
(21) Application number: 10382315.9
(22) Date of filing: 23.11.2010
(51) Int. Cl.: A47K 3/034

(54) **Detachable and height adjustable bathtub for use in cleaning and care of infants and pets**

(30) Priority: 16.09.2010 ES 201001194
(71) Applicant: Campos Sanchez, Francisco, Malaga (ES)
(72) Inventor: Campos Sanchez, Francisco, Malaga (ES)
(74) Representative: Herrera Hume, Fernando

(57) **Abstract**

Detachable and height adjustable bathtub for use in the cleaning and care of infants and pets consisting of a plastic bathtub which have installed four opened hinges (2) as inverted U-shape wherein four square profiles, which serve as legs (4), are fitted by a bolt (3) and are telescopically related to a second profiles (5) with square-shape too. The four telescopic legs also end perpendicularly by second hinges (6) and its respective bolts (7) in third square profiles (8) telescopically related to fourth profiles (9). The bathtub at its top and at one of its ends (10) has three areas (11), two of which are perforated (12) and a third (13), which occupies its central part, is free to place any other accessory. At this same end (10) is fitted a towel rack (14). At the opposite end (15) of the bathtub is found a plastic device (16) wherein the shower head (17) is fitted. At the bottom (18) of the bathtub is the drain pipe (14) wherein is installed a drain (20).

## Description

The present invention relates to a undersize bathtub made of plastic that is installed over the household bathtub with articulated, folding and telescopic legs, with the object of regulate the height and have the convenience of washing newborns or infants and pets without having to make an inadequate physical effort such as having to tilt the body and keep it in that state for a time in order to bathe an infant or pet. It takes the water of the household bathtub, and in this, carry out its drainage. It incorporates cavities for toiletries as well as a rod-shaped towel rack.

It is known the difficulty that occurs in homes at the moment of clean both newborns or infants and pets. Usually the household bathtub is often used since is elaborated with easy-to-clean and resistant to aggressive detergents-materials and serves for the cleaning of both animals and persons. This fact forces to the user who is performing the cleaning to take a position at the height of the bathtub with the subsequent inconvenience and aggressive posture with the body. Pets need a care and a cleaning that sometimes is avoided by the fact of no having the adequate tools to maintain the hygiene that the animals need.

The present invention has it field of application in the industry of portable bathtubs and, within this, in the industry of plastic bathtubs for very young children and pets.

The state of the art gives some models with somewhat similar features, although none with the novelties proposed by the present invention.

Thus, the document 2197599 proposes a suspension support of a bathtub for newborns or infants on a bathtub for adults and it is characterized by have a spinning movement on the same plane and includes adjustable arms in order to take a position in any measure of the width of the bathtub. The document 2023479 describes a lifting complement inside of the bathtub that serves as bottom along this and, in turn, as elevation of the person that is taking a bath. The document 207929 relates a support frame in which the bathtub is fitted and this can be easily removed or, otherwise, it can be installed without any kind of brickwork.

Against the present invention, these known systems show great disadvantages:
- The document 2197599 proposes a support that fits in the bathtub but it is not adjustable in height, being always level with the bathtub and thus, the problem of the difficulty of having to tilt the back to bathe the infant.
- The document 2023479 describes a frame adjustable in height incorporated in the household bathtub, but since it has not a cavity, the maximum height that it can reach is the same as the bathtub, because, if the height exceeds the bathtub, the frame cannot keep the water and the washing ends.
- The document 207929 has not elevation: It is a bathtub of easy installation without brickwork.

Against these disadvantages, the system proposed by the present invention gives to the state of the art the following advantages:
- It is possible bathe both pets and infants at the required height since the bathtub is adjustable in height.
- It is also adjustable in width because of its telescopic bases which increase or reduce the width.
- It can to have on hand all the possible bathing accessories including the tower.
- It takes the water of the household bathtub and thus, it does not need additional installation.
- It drains away in the same bathtub.
- It has in the water outlet a filter or drain in order to retain therein the animal hairs or the dirt that the water carries.
- Simple installation
- Cheap manufacturing cost.

All these elements conjugated give rise to a final result in which significant distinguishing characteristics are provided against the state of the current art.

Thus, the present invention is constituted from a plastic or PVC bathtub which has installed four opened hinges with inverted U-shape wherein four square profiles, which serve as legs, are fitted by a bolt, and are telescopically related to seconds profiles which are square too with the object of may be adjustable in height. The bolt permits the articulation of the profiles. These four telescopic legs end perpendicularly also by means of second hinges and its respective bolts in third square profiles telescopically related to fourth profiles with the object of can be adjustable in length and be regulated to the width of the bathtub. The bathtub at its top and at one of its ends has three areas, two of which are perforated so as fit the toiletries, and a third which occupies its central part is free to place any other accessory. At this same end is fitted a towel rack consisting on a rod connected to the bathtub by adequate means. At the opposite end of the bathtub is found a plastic device wherein the shower head is fitted. At the bottom of the bathtub is found the drain pipe wherein is installed a drain with the object of retain the dirtiness therein.

For a better understanding of this specification, this is accompanied of a drawing by way of non-limitative example, which describes a preferred embodiment of the invention:

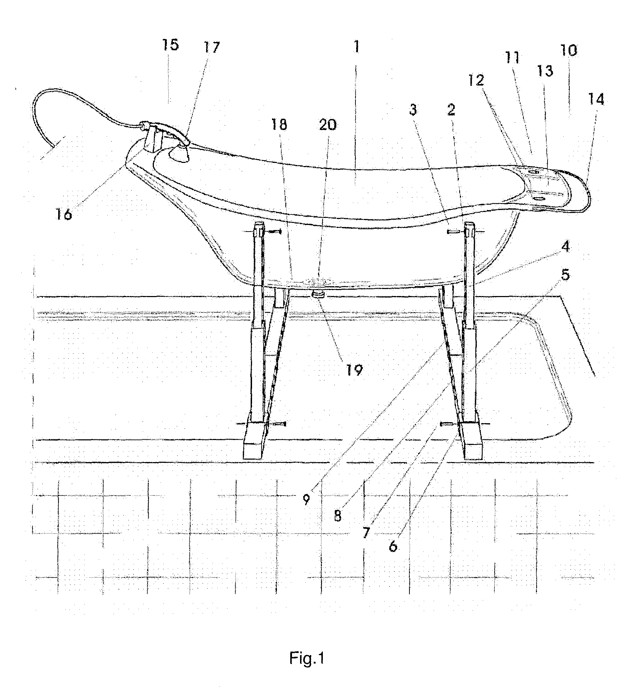

Figure 1: Perspective view of the bathtub. In said figure are highlighted the following numbered elements:
   1. Plastic bathtub
   2. Hinges
   3. Bolt
   4. Four square profiles
   5. Second square profiles
   6. Second hinges
   7. Bolts of the second hinges
   8. Third square profiles
   9. Fourth profiles
   10. End of the bathtub
   11. Spaces of the top of the bathtub.
   12. Two perforated areas
   13. Third non-perforated area
   14. Tower rack
   15. Opposite end
   16. Plastic device
   17. Shower head
   18. Bottom of the bathtub
   19. Drain pipe
   20. Drain

A preferred embodiment of the invention proposed is constituted from a plastic or PVC bathtub (1) which have installed four opened hinges (2) as inverted U-shape wherein four square profiles, which serve as legs (4), are fitted by a bolt (3) and are telescopically related to a second profiles (5) with square-shape too. The bolt (3) permits the joint of the profiles (4 and 5). These telescopic legs (4 and 5) also end perpendicularly by second hinges (6) and its respective bolts (7) in third square profiles (8) telescopically related to fourth profiles (9). The bathtub (1) at its top and at one of its ends (10) has three areas (11), two of which are perforated (12) so as fit the toiletries and a third (13), which occupies its central part, is free to place any other accessory. At this same end (10) is fitted a towel rack (14) consisting of a rod connected to the bathtub by adequate means. At the opposite end (15) of the bathtub is found a plastic device (16) wherein the shower head (17) is fitted. At the bottom of the bathtub (18) is the drain pipe (19) wherein is installed a drain (20).

## Claims

1. Detachable and height adjustable bathtub for use in the cleaning and care of infants and pets, consisting of a plastic or PVC bathtub, **characterized in that** it has installed four opened hinges (2) with inverted U-shape where in four square profiles, which serve as legs (4), are fitted by a bolt (3), and are telescopically related to with second profiles (5), which are square too.

2. Detachable and height adjustable bathtub for use in the cleaning and care of infants and pets, according to the claim 1, **characterized in that** the bolt (3) claimed in the claim 1 permits the joint of the profiles (4 and 5), and that the four telescopic legs (4 and 5) end perpendicularly also by second hinges (6) and its respective bolts (7) in third square profiles (8) telescopically related to a fourth profiles (9).

3. Detachable and height adjustable bathtub for use in the cleaning and care of infants and pets, according to the claim 1 y 2, **characterized in that** the bathtub (1) at its top and at one of its ends (10) has three areas (11), two of which are perforated (12) in order to fit toiletries and a third (13), which occupies its central part, is free to place any other accessory. At this same end (10) is fitted a towel rack (14) consisting of a rod connected to the bathtub by adequate means.

4. Detachable and height adjustable bathtub for use in the cleaning and care of infants and pets, according to the claim 1 2 y 3, **characterized in that** at the opposite end (15) of the bathtub is found a plastic device (16) wherein the shower head (17) is fitted.

5. Detachable and height adjustable bathtub for use in the cleaning and care of infants and pets, according to the claim 1 2 3, and 4, **characterized in that** at the bottom of the bathtub (18) is the drain pipe (19) wherein is installed a drain (20).
